# EUROPÄISCHE PATENTSCHRIFT

(11) **EP 3 939 867 B1**
(45) Veröffentlichungstag und Bekanntmachung des Hinweises auf die Patenterteilung: **24.07.2024**
(21) Anmeldenummer: 21171793.9
(22) Anmeldetag: 03.05.2021
(51) Int. Cl.: B62D 55/253, B62D 55/28

(54) **LAUFWERKSKETTE FÜR EIN KETTENFAHRZEUG**
DRIVE CHAIN FOR A TRACKED VEHICLE
CHENILLES D'ENTRAINEMENT POUR UN VÉHICULE À CHENILLES

(30) Priorität: 13.07.2020 DE 102020208735
(43) Veröffentlichungstag der Anmeldung: 19.01.2022
(73) Patentinhaber: Kässbohrer Geländefahrzeug AG, 88471 Laupheim (DE)
(72) Erfinder: Müller, Steffen, 89176 Asselfingen (DE); Zacharias, Benjamin, 88471 Laupheim (DE); Bendele, Tobias, 89129 Nerenstetten (DE)
(74) Vertreter: Patentanwälte Ruff, Wilhelm, Beier, Dauster & Partner mbB

(56) Entgegenhaltungen:
- EP-A1- 1 117 585
- EP-A1- 3 519 281
- EP-A2- 0 263 310
- EP-B1- 2 778 027
- DE-A1- 102013 204 624
- DE-U1- 202018 104 420
- US-A- 5 354 124
- US-A1- 2012 104 841

## Beschreibung

Die Erfindung betrifft eine Laufwerkskette für ein Kettenfahrzeug nach dem Oberbegriff des Anspruchs 1.

Eine solche Laufwerkskette ist aus der EP 1 117 585 A1 bekannt. Die bekannte Laufwerkskette für eine Pistenraupe weist mehrere, in Kettenlaufrichtung parallel zueinander erstreckte Kettenbänder auf. An diesen Kettenbändern ist eine Vielzahl von quer zur Kettenlaufrichtung ausgerichteten Kettensteganordnungen befestigt, wobei jede Kettensteganordnung einen Kettensteg aufweist. Jeder Kettensteg ist im Bereich seines Kettenstegbodens mit den Kettenbändern verbunden, wobei zur Verbindung des Kettenstegbodens mit den Kettenbändern mehrere Durchdringungselemente vorgesehen sind, die in die Kettenbänder formschlüssig eindringen.

Eine weitere Laufwerkskette ist aus der DE 10 2013 204 624 A1 für eine Pistenraupe bekannt. Die bekannte Laufwerkskette weist mehrere in Kettenlaufrichtung parallel zueinander erstreckte Kettenbänder auf, mit denen quer über die Breite der Kettenbänder erstreckte Kettensteganordnungen verbunden sind. Eine entsprechende Kettensteganordnung weist einen Kettensteg auf, der bandaußenseitig auf ein Kettenband aufgesetzt ist und mithilfe einer bandinnenseitig vorgesehenen Bandunterlage sowie einer Schraubverbindung auf dem Kettenband befestigt ist. Die Schraubverbindung weist eine Kopfschraube sowie eine Gewindebohrung in einem Kettenstegboden des Kettensteges auf. Die Kopfschraube ragt durch einen Durchtritt in dem Kettenband hindurch. Ein Schraubenkopf der Kopfschraube liegt bandinnenseitig auf der Bandunterlage auf. Zur Verbindung jedes Kettensteges mit den entsprechenden Kettenbändern sind pro Kettenband jeweils zwei Schraubverbindungen und zwei Durchtritte in den Kettenbändern vorgesehen.

Aus der EP 2 778 027 B1 ist eine weitere Laufwerkskette für eine Pistenraupe bekannt, bei der einzelne Kettenbänder an ihren gegenüberliegenden Enden jeweils durch ein Kettenschloss miteinander verbunden sind. In einer speziellen Ausführungsform der EP 2 778 027 B1 weist eine Kettenschlossteileinheit eines solchen Kettenschlosses eine Vielzahl von über eine Breite jedes Bandendes verteilten Durchdringungsspitzen auf, die das Bandende orthogonal zu einer Banddeckfläche des Kettenbandes durchdringen und kopfseitig in einer auf der Banddeckfläche aufliegenden, formstabilen Trägeranordnung gehalten sind. Zudem sind die Durchdringungsspitzen gegenüberliegend, also spitzseitig, kraft- oder formschlüssig in einer weiteren, formstabilen Aufnahmeanordnung gehalten, die auf einer gegenüberliegenden Banddeckfläche des Bandendes des Kettenbandes angeordnet ist.

Aufgabe der Erfindung ist es, eine Laufwerkskette der eingangs genannten Art zu schaffen, die Verschleißerscheinungen bei Kettenbändern und Kettensteganordnungen reduziert.

Diese Aufgabe wird durch die Merkmale des Anspruchs 1 gelöst. Die formschlüssige Zuordnung der Durchdringungselemente relativ zum Kettenstegboden ist direkt oder indirekt vorgesehen. Eine indirekte formschlüssige Zuordnung liegt vor, wenn die Durchdringungselemente über ein weiteres Funktionsbauteil oder einen weiteren Funktionsabschnitt in Kettenlaufrichtung formschlüssig relativ zum Kettenstegboden gestützt sind. Eine direkte formschlüssige Zuordnung liegt vor, wenn die Durchdringungselemente direkt formschlüssig mit dem Kettenstegboden in Wirkverbindung sind. Die erfindungsgemäße Lösung reduziert im Betrieb der Laufwerkskette Relativbewegungen zwischen dem jeweiligen Kettensteg und dem jeweiligen Kettenband. Hierdurch ist eine längere Haltbarkeit der Kettenbänder und der Kettenstege erzielbar. Hierdurch wird eine längere Haltbarkeit der Laufwerkskette erzielt. Verschleißerscheinungen der Laufwerkskette werden reduziert. Die erfindungsgemäße Lösung eignet sich in besonders vorteilhafter Weise für ein Kettenfahrzeug in Form einer Pistenraupe, die auf nachgiebigem Untergrund, insbesondere auf Schnee, bewegt wird. Die erfindungsgemäße Lösung ist aber auch für andere Arten von Kettenfahrzeugen einsetzbar. Erfindungsgemäß ist es möglich, lediglich einen Teil der Kettenstege der Laufwerkskette mithilfe der Durchdringungselemente relativ zu dem wenigstens einen Kettenband zu fixieren. Die übrigen Kettenstege können in anderer Art und Weise, beispielsweise in bekannter Art und Weise, mit dem wenigstens einen Kettenband verbunden sein. Die erfindungsgemäße Lösung ist besonders vorteilhaft, wenn die Laufwerkskette zwischen vier und zehn parallel zueinander erstreckten, aber quer zur Kettenlaufrichtung zueinander beabstandeten Kettenbändern versehen ist.

Erfindungsgemäß sind an dem Kettenstegboden mehrere von dem Kettenstegboden aus in Richtung des Kettenbandes abragende Dorne befestigt, die in montiertem Zustand in das Kettenband eingedrückt sind, um - in Kettenlaufrichtung gesehen - einen Formschluss mit dem Kettenband zu erzielen. In Kettenlaufrichtung gesehen sind die Dorne nach dem Eindrücken formschlüssig in dem Kettenband verankert. Die Dorne bewirken zusätzlich zu der wenigstens einen Schraubverbindung einen Formschluss zwischen jedem Kettensteg und dem entsprechenden Kettenband. Die Dorne sind in vorteilhafter Weise aus Metall hergestellt, insbesondere aus einer Leichtmetalllegierung oder aus einer Stahllegierung.

Erfindungsgemäß ist der Kettensteg mittels wenigstens einer einen Durchtritt in dem Kettenband durchdringenden Schraubverbindung und wenigstens einem Unterlagelement mit dem Kettenband verbunden. Dies ist eine besonders funktionssichere Befestigung des Kettenstegs am Kettenband. Zudem ist eine Austauschbarkeit von Kettensteg und Kettenband durch die Lösbarkeit der Schraubverbindung gegeben.

Erfindungsgemäß sind die Dorne für jedes Kettenband jeweils benachbart zu der pro Kettenband vorgesehenen, wenigstens einen Schraubverbindung am Kettenstegboden angeordnet. Dadurch ergibt sich zwangsläufig bei einem Montieren und Spannen der wenigstens einen Schraubverbindung ein kraftschlüssiges Eindrücken der Dorne in eine Oberfläche des Kettenbandes. Vorzugsweise sind die Dorne so am Kettenstegboden ausgerichtet, dass die Dorne orthogonal zu einer Oberfläche des Kettenbandes in diese eindringen.

Erfindungsgemäß weist jeder Dorn eine Eindringspitze sowie einen Befestigungssockel auf, und der Kettenstegboden ist mit Aufnahmen zum Einsetzen und Sichern der Befestigungssockel der Dorne versehen. Dadurch ist eine funktionssichere Befestigung der Dorne in dem Kettenstegboden erzielbar. Die Dorne können mit ihren Befestigungssockeln in den Aufnahmen des Kettenstegbodens stoffschlüssig, kraftschlüssig oder formschlüssig gehalten sein. Hierzu können die Befestigungssockel in die Aufnahmen insbesondere eingelötet, eingeklebt, eingeschweißt sein. Alternativ oder ergänzend können die Befestigungssockel mittels einer Übergangs- oder Presspassung in die Aufnahmen eingefügt werden. Schließlich ist es auch möglich, die Befestigungssockel mit einem Außengewinde zu versehen, und die Aufnahmen durch komplementäre Innengewinde auszubilden, so dass die Dorne in die Aufnahmen des Kettenstegbodens eingeschraubt werden können.

Erfindungsgemäß sind die Durchtritte in den Kettenbändern mit metallischen Stützbuchsen versehen, die als Abstandshalter zwischen Kettenstegboden und Unterlagelementen dienen. Die metallischen Stützbuchsen sind vorzugsweise in den Durchtritten der Kettenbänder positionsgesichert. Die Stützbuchsen reduzieren Verschleißerscheinungen der Durchtritte. Die Stützbuchsen sind vorzugsweise aus einer Leichtmetalllegierung oder einer Stahllegierung hergestellt.

In Ausgestaltung der Erfindung sind im Bereich jedes Kettenbandes wenigstens zwei Reihen von Dornen am Kettenstegboden vorgesehen, die insbesondere parallel zueinander ausgerichtet sind. Dadurch ist ein verbesserter Formschluss zwischen Kettenband und Kettensteg erzielbar.

In weiterer Ausgestaltung der Erfindung ist eine Länge jeder Eindringspitze jedes Dornes kleiner oder gleich einer Dicke des zugeordneten Kettenbandes. Dadurch ist gewährleistet, dass die Eindringspitze des Dornes nicht auf der der Eindringseite gegenüberliegenden Seite des Kettenbandes wieder aus dem Kettenband heraustritt. Zudem können die Dorne so Abstandshalter zwischen dem Kettenstegboden und dem entsprechenden Unterlagelement, insbesondere wenigstens einer Unterlagplatte oder einer Unterlagscheibe, bilden.

In weiterer Ausgestaltung der Erfindung sind mehrere Dorne auf einer Trägerplatte fest angeordnet, die mit dem Kettenstegboden verbunden ist. Diese Trägerplatte kann stoffschlüssig, kraftschlüssig oder formschlüssig mit dem Kettenstegboden verbunden sein. Der Kettenstegboden kann mit einer auf die Dicke der Trägerplatte abgestimmten Aussparung versehen sein, in die die Trägerplatte bodenbündig einfügbar ist.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in einer Frontansicht ein Kettenfahrzeug in Form einer Pistenraupe mit zwei Laufwerksketten, die eine bevorzugte Ausführungsform der Erfindung bilden,
- Fig. 2: schematisch einen Teilbereich einer Laufwerkskette gemäß Fig. 1,
- Fig. 3: in vergrößerter, perspektivischer Darstellung einen Ausschnitt der Ausführungsform der erfindungsgemäßen Laufwerkskette gemäß Fig. 1,
- Fig. 4: in quer zur Kettenlaufrichtung gesehener Seitenansicht den Ausschnitt der Laufwerkskette gemäß Fig. 3,
- Fig. 5: eine Schnittdarstellung des Ausschnittes der Laufwerkskette gemäß Fig. 4 entlang der Schnittlinie V-V in Fig. 4,
- Fig. 6: in perspektivischer Darstellung einen Ausschnitt einer nicht zur Erfindung zählenden Ausführungsform einer Laufwerkskette ähnlich Fig. 2,
- Fig. 7: in vergrößerter Darstellung einen Schnitt durch den Ausschnitt der Laufwerkskette nach Fig. 6,
- Fig. 8: in perspektivischer Explosionsdarstellung einen Ausschnitt einer weiteren, nicht zur Erfindung zählenden Ausführungsform einer Laufwerkskette ähnlich Fig. 2,
- Fig. 9: den Ausschnitt der Laufwerkskette gemäß Fig. 8 in perspektivischer Darstellung,
- Fig. 10: den Ausschnitt der Laufwerkskette nach den Fig. 8 und 9 in einer Seitenansicht,
- Fig. 11: einen Schnitt durch die Darstellung gemäß Fig. 10 entlang der Schnittlinie XI-XI in Fig. 10 und
- Fig. 12: einen weiteren Schnitt durch die Laufwerkskette nach Fig. 10 entlang der Schnittlinie XII-XII in Fig. 10.

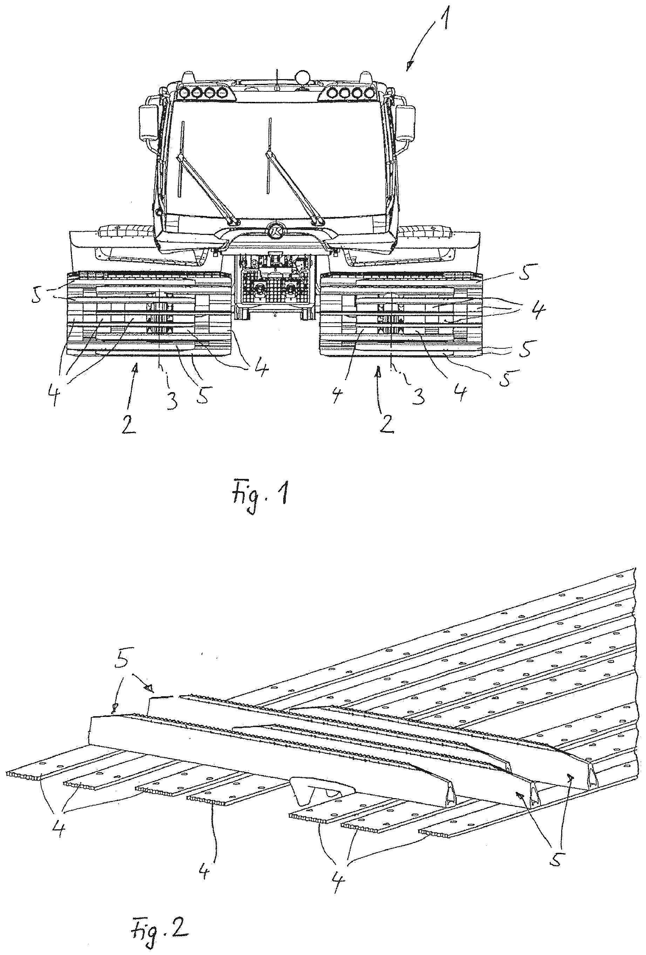

Eine Pistenraupe 1 gemäß Fig. 1 weist ein Kettenfahrwerk mit einer linksseitigen Laufwerkskette 2 und einer rechtsseitigen Laufwerkskette 2 auf. Jede Laufwerkskette 2 ist frontseitig um ein Spannrad und heckseitig um ein Turasrad des Kettenfahrwerks herumgeführt und im Übrigen durch mehrere zwischen dem Spannrad und dem Turasrad in Fahrzeuglängsrichtung hintereinander angeordnete Laufräder gestützt. Die Laufräder, das Spannrad und das Turasrad sind in Fahrzeuglängsrichtung in einer gemeinsamen Flucht ausgerichtet, die durch die strichpunktierte Linie gekennzeichnet und mit dem Bezugszeichen 3 versehen ist. Die Laufwerkskette 2 weist mehrere in Kettenlaufrichtung erstreckte, im Fahrbetrieb umlaufende und parallel zueinander ausgerichtete Kettenbänder 4 auf. Die Kettenbänder 4 sind an ihren gegenüberliegenden Enden über Kettenschlösser S zu einem umlaufenden Kettenband miteinander verbunden, sobald die Laufwerkskette 2 an der Pistenraupe 1 fertig montiert ist. Auf den Kettenbändern 4 sind Kettensteganordnungen befestigt, die alternierend versetzt zueinander, im Übrigen jedoch quer zur Kettenlaufrichtung ausgerichtet sind. Jede Kettensteganordnung weist einen Kettensteg 5 auf, der außenseitig auf den Kettenbändern 4 in nachfolgend näher beschriebener Weise befestigt ist. An jedem Kettensteg ist zudem ein nicht näher bezeichneter Spurbügel vorgesehen, der zur Innenseite der Kettenbänder 4 gerichtet ist, da der jeweilige Spurbügel die Führung der Laufwerkskette 2 über die verschiedenen Räder, das heißt das Spannrad, das Turasrad und die Laufräder, vornimmt.

Jeder Kettensteg 5 weist einen Kettenstegboden K auf, der auf einer außenseitigen Oberfläche jedes Kettenbandes 4 aufliegt.

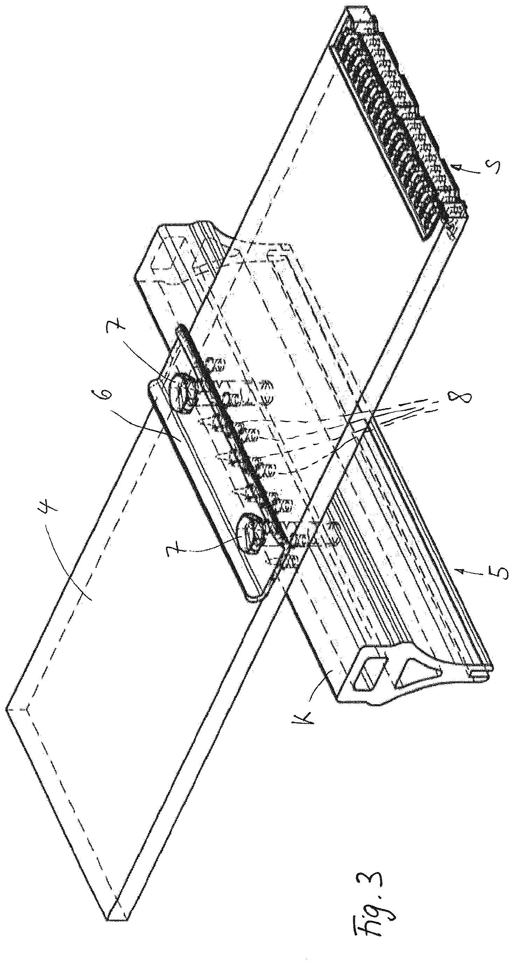

Anhand der Fig. 2 ist die Ausrichtung der Kettenstege 5 auf einem Obertrum der Laufwerkskette 2 und anhand der Darstellungen der Fig. 3 bis 5 die Ausrichtung eines Kettenstegs 5 im Bereich eines Untertrums der Laufwerkskette 2 gezeigt, so dass bei den Darstellungen nach den Fig. 3 bis 5 der Kettensteg 5 nach unten weist und das jeweilige Kettenband 4 oberhalb des Kettenstegs 5 verläuft.

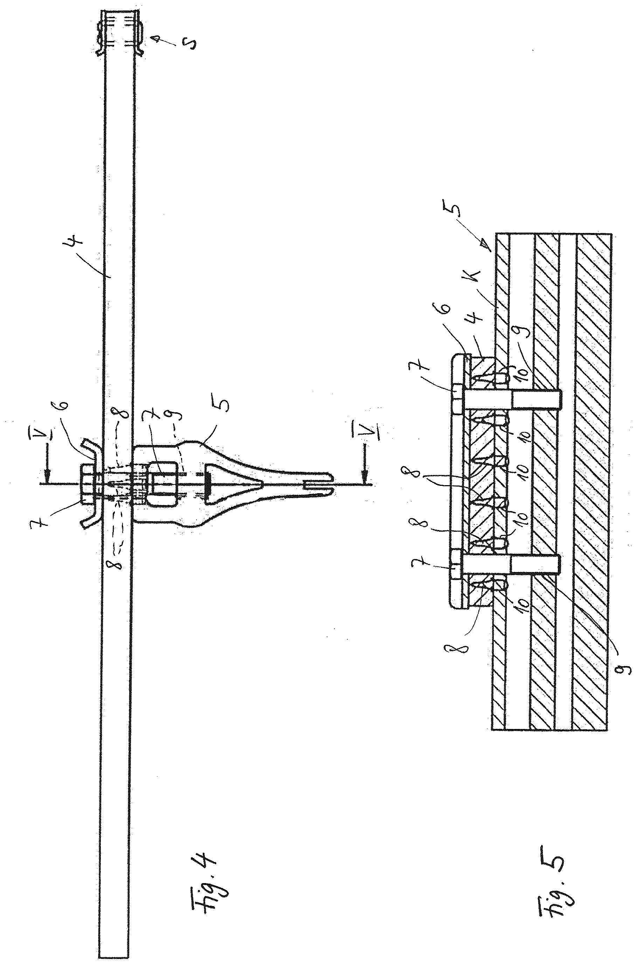

Jedes Kettenband 4 weist auf Höhe jedes Kettenstegs zwei zylindrische Durchtritte auf, durch die zwei Kopfschrauben 7 hindurchragen, die in Gewindebohrungen 9 eines Mittelstegs des Kettenstegs eingeschraubt sind und die durch Bohrungen des Kettenstegbodens hindurchragen (siehe insbesondere Fig. 5). Die Kopfschrauben 7 weisen Schraubenköpfe auf, die sich oberhalb des Kettenbandes 4 auf einer als Unterlagelement dienenden Unterlagplatte 6 abstützen. Die Unterlagplatte 6 weist zwei Bohrungen auf, die zu den Durchtritten im Kettenband 4 und zu den Gewindebohrungen 9 im Mittelsteg des Kettensteges 5 fluchten. Die durch die Kopfschrauben 7 und die Gewindebohrungen 9 definierten Schraubverbindungen dienen zur Befestigung des Kettensteges 5 an dem Kettenband 4 und relativ zur Unterlagplatte 6.

Um eine ergänzende formschlüssige Sicherung zwischen dem Kettenband 4 und dem Kettensteg 5 zu erzielen, sind in dem Kettenstegboden insgesamt drei Reihen von parallel zueinander ausgerichteten Dornen 8 vorgesehen, die anhand der Fig. 3 bis 5 gut erkennbar sind. Dabei sind, wie Fig. 3 zeigt, in einer mit den beiden Schraubverbindungen 7, 9 fluchtenden Ebene einer mittleren Reihe von Dornen 8 insgesamt drei Dorne vorgesehen. Zudem sind zwei diese Mittelebene der Schraubverbindungen 7, 9 jeweils außenseitig flankierende äußere Reihen von Dornen 8 vorgesehen, die jeweils fünf Dorne 8 aufweisen. Die äußeren Reihen verlaufen parallel zu der mittleren Reihe. Alle Dorne 8 sind identisch zueinander gestaltet und weisen einen Befestigungssockel sowie eine Dornspitze auf. Der jeweilige Befestigungssockel ist in jeweils einer Aufnahme 10 im Kettenstegboden derart gehalten, dass die Dornspitzen zumindest weitgehend orthogonal von einer Außenfläche des Kettenstegbodens 5 aus zu dem Kettenband 4 hin abragen. Die Befestigung der Befestigungssockel der Dorne 8 in den Aufnahmen 10 ist beim dargestellten Ausführungsbeispiel durch Einschweißen, Einlöten oder Einkleben und damit stoffschlüssig erfolgt. Bei nicht dargestellten Ausführungsbeispielen der Erfindung sind die Aufnahmen 10 mit Innengewinden versehen und die Befestigungssockel der Dorne 8 weisen komplementäre Außengewinde auf, so dass die Dorne 8 in die Aufnahmen 10 des Kettenstegbodens des Kettensteges 5 eingeschraubt werden können. Nach der Montage der Dorne 8 wird jeder Kettensteg 5 so relativ zu dem jeweiligen Kettenband 4 positioniert, dass die Gewindebohrungen des Kettenstegs 5 mit den Durchtritten des jeweiligen Kettenbandes 4 fluchten. Auch die Unterlagplatte 6 wird mit ihren Bohrungen gegenüberliegend zu dem Kettensteg 5 fluchtend zu den Durchtritten des Kettenbandes 4 ausgerichtet. Anschließend werden die Kopfschrauben 7 durch die Bohrungen der Unterlagplatte 6 und die Durchtritte im Kettenband 4 hindurchgeführt und mit den Gewindebohrungen 9 des Kettensteges verschraubt. Dabei wird zwangsläufig der Kettensteg 5 gegen das Kettenband 4 gezogen, wodurch die Dorne 8 in die Oberfläche des Kettenbandes 4 eingedrückt werden, bis der Kettenstegboden bündig an der Oberfläche anliegt. Nun sind die Dornspitzen vollständig in das Kettenband 4 über dessen Dicke eingedrückt. Die Dorne 8 bilden Durchdringungselemente im Sinne der Erfindung.

Wie anhand der Fig. 5 gut erkennbar ist, ist die Länge der Dornspitzen so gewählt, dass diese Länge maximal gleich einer Dicke des Kettenbandes 4 ist. Dadurch ragen die Dornspitzen nicht über die in den Fig. 3 bis 5 oben liegende Oberfläche des Kettenbandes 4 nach oben heraus, wodurch die Dornenspitzen 8 als Abstandshalter für die Unterlagplatte 6 dienen können.

Die Dorne 8 sind beim dargestellten Ausführungsbeispiel aus Metall hergestellt, vorzugsweise aus einer dem Material des Kettensteges 5 entsprechenden Leichtmetalllegierung.

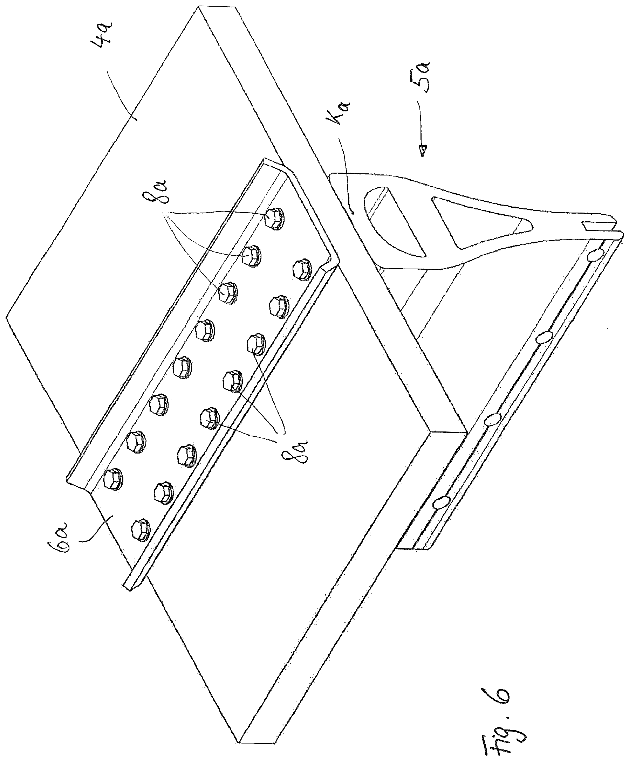

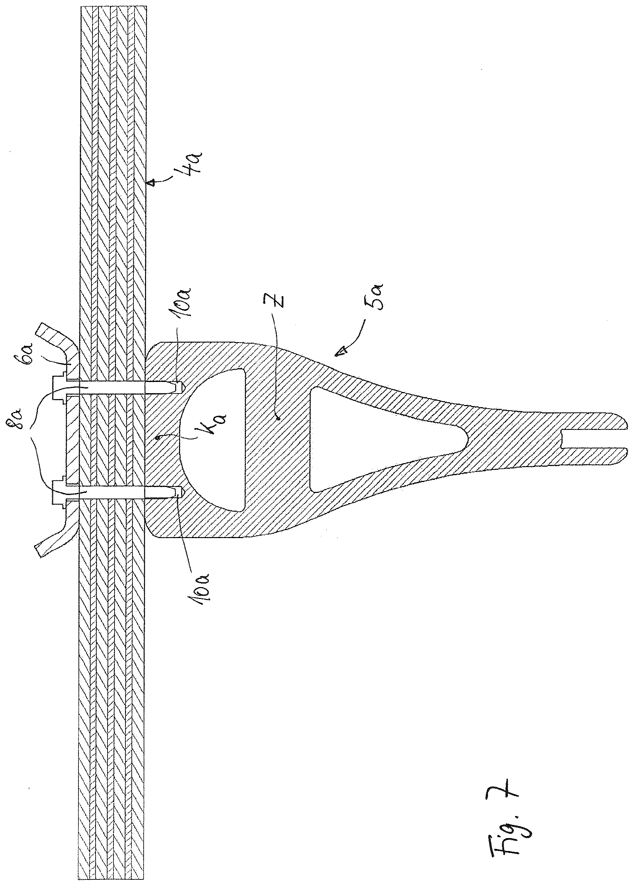

Die Laufwerkskette gemäß den Fig. 6 und 7 entspricht im Wesentlichen der Laufwerkskette, wie sie anhand der Fig. 1 bis 5 bereits ausführlich beschrieben wurde. Zur Vermeidung von Wiederholungen wird daher ergänzend auf die Offenbarung zu der Ausführungsform gemäß den Fig. 1 bis 5 verwiesen. Funktionsgleiche Teile und Abschnitte sind mit gleichen Bezugszeichen unter Hinzufügung des Buchstabens a versehen. Nachfolgend wird auf die Unterschiede der Laufwerkskette gemäß den Fig. 6 und 7 eingegangen.

Wesentlicher Unterschied bei der Laufwerkskette gemäß den Fig. 6 und 7 ist es, dass eine Verbindung des Kettenstegs 5a mit dem wenigstens einen Kettenband 4a ausschließlich über nachfolgend näher beschriebene Durchdringungselemente 8a erfolgt, ohne dass zusätzlich Befestigungsschrauben 7 vorgesehen sind, die entsprechende Durchtritte in dem jeweiligen Kettenband 4a durchdringen. Die Durchdringungselemente 8a sind selbstschneidende Befestigungsschrauben, die gegenüber den Befestigungsschrauben 7 gemäß der Ausführungsform nach den Fig. 1 bis 5 wesentlich dünner ausgeführt sind. Die Unterlagplatte 6a, die gegenüberliegend zu dem Kettensteg 5a auf einer Oberfläche des Kettenbands 4a aufliegt, ist mit insgesamt 16 Bohrungen versehen, durch die 16 selbstschneidende Befestigungsschrauben 8a hindurchragen, die in zwei zueinander parallel ausgerichteten Reihen gleichmäßig beabstandet in der Unterlagplatte 6a positioniert sind. Die Länge der Befestigungsschrauben 8a, die als Kopfschrauben ausgeführt sind, ist größer als eine Dicke des Kettenbands 4a. Jeder Schraubenkopf ist in montiertem Zustand auf der Unterlagplatte 6a abgestützt. Alle Befestigungsschrauben 8a sind identisch zueinander gestaltet. Bei einem nicht dargestellten Ausführungsbeispiel weisen die Befestigungsschrauben unterschiedliche Längen auf.

In dem Kettenstegboden Kₐ ist eine der Anzahl der Befestigungsschrauben 8a entsprechende Anzahl von Zentrierlöchern 10a vorgesehen, deren Lochbild im Kettenstegboden Kₐ identisch ist zu dem Lochbild der Durchtritte in der Unterlagplatte 6a. Die Durchmesser der Zentrierlöcher 10a sind geringer als entsprechende Nenndurchmesser von Außengewinden der Befestigungsschrauben 8a, so dass die Befestigungsschrauben 8a sich in die Wandungen der Zentrierlöcher 10a einschneiden können. Die Befestigungsschrauben 8a sind aus Stahl hergestellt und weisen demzufolge eine größere Härte auf als die Aluminiumlegierung des Materials des Kettenstegs 5a. Wie anhand der Fig. 7 erkennbar ist, weisen alle Befestigungsschrauben 8a eine verjüngte Spitze auf, die das Zentrieren und Einschneiden der Außengewinde der Befestigungsschrauben 8a in die Zentrierlöcher 10a erleichtert. Die verjüngten Spitzen können derart spitz zulaufend gestaltet sein, dass die Befestigungsschrauben 8a durch die Dicke des Kettenbands 4a hindurchgeschraubt werden können, ohne dass in dem Kettenband 4a bereits vorgefertigte Bohrungen vorhanden sind. Alternativ wird das Kettenband 4a mit einer der Anzahl der Befestigungsschrauben 8a und der Anzahl der Durchtritte der Unterlagplatte 6a entsprechenden Anzahl von Zentrierbohrungen versehen, deren Lochbild dem Lochbild der Durchtritte der Unterlagplatte 6a entspricht.

Die Zentrierlöcher 10a können alternativ zu der Positionierung im Kettenstegboden Kₐ auch in dem anhand der Fig. 7 erkennbaren Zwischensteg Z vorgesehen sein. Eine weitere Alternative ist es, die Zentrierlöcher 10a sowohl im Kettenstegboden Kₐ als auch im Zwischensteg Z vorzusehen, wobei die entsprechenden Zentrierlochabschnitte miteinander fluchten. Dementsprechend müssen auch die Befestigungsschrauben 8a länger gestaltet sein.

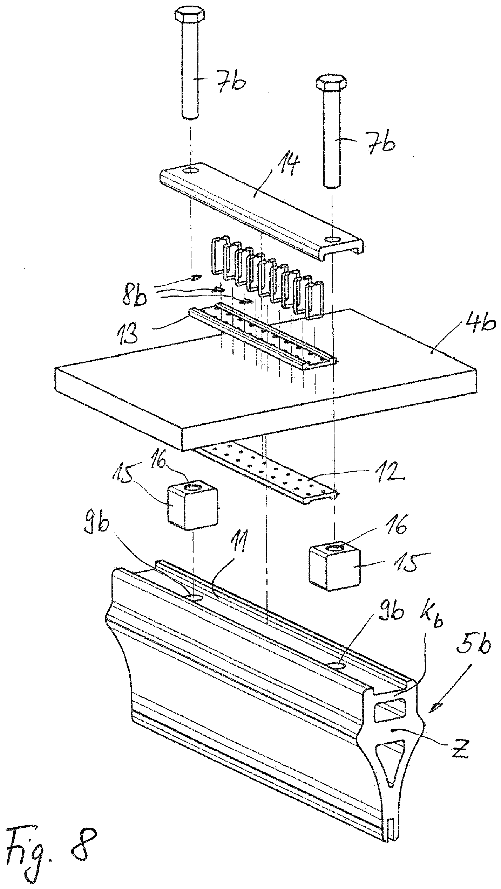

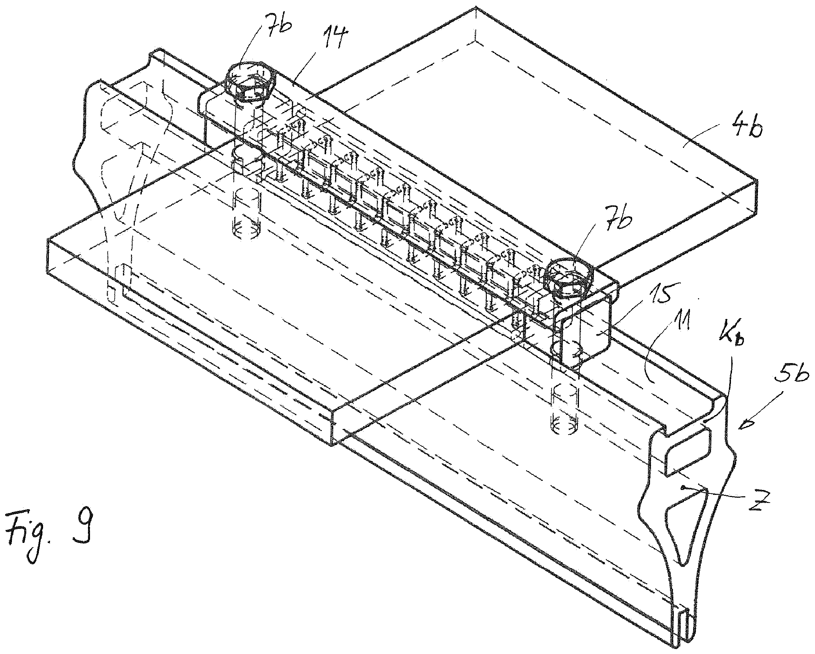

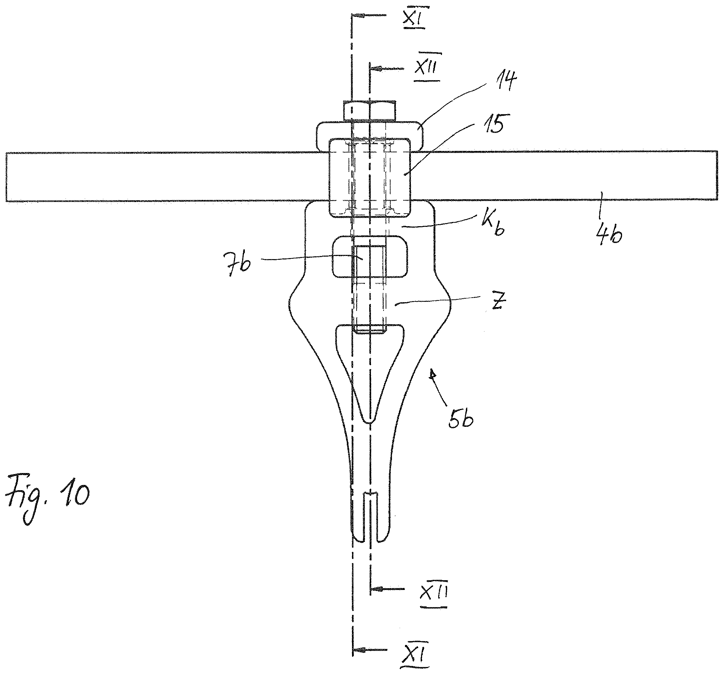

Bei der Ausführungsform nach den Fig. 8 bis 11 ist eine Laufwerkskette ausschnittsweise dargestellt, die von ihrem grundsätzlichen Aufbau den zuvor beschriebenen Ausführungsformen gemäß den Fig. 1 bis 7 entspricht. Auch diese Laufwerkskette ist für eine Pistenraupe gemäß Fig. 1 vorgesehen. Zudem ist diese Laufwerkskette analog der Fig. 2 gestaltet. Funktionsgleiche Teile und Abschnitte sind mit gleichen Bezugszeichen, jedoch unter Hinzufügung des Buchstabens b versehen. Zur Vermeidung von Wiederholungen wird auch für diese Ausführungsform gemäß den Fig. 8 bis 12 ergänzend auf die Offenbarung zu den vorhergehenden Ausführungsformen verwiesen.

Bei der Ausführungsform nach den Fig. 8 bis 12 wird der Kettensteg 5b nicht direkt formschlüssig mit dem Kettenband 4b verbunden, wie es bei den Ausführungsformen gemäß den Fig. 1 bis 7 der Fall ist. Vielmehr wird der Kettensteg 5b mit einer nachfolgend näher beschriebenen Trägeranordnung formschlüssig verbunden, die wiederum - in Kettenlaufrichtung gesehen - formschlüssig mit dem Kettenband 4b verbunden ist.

Zur Verbindung des Kettenbands 4b mit dem Kettenstegboden K_{b} des Kettenstegs 5b sind mehrere, im Wesentlichen U-förmige Durchdringungsstifte als Durchdringungselemente 8b vorgesehen, die das Kettenband 4b in Hochrichtung durchdringen und nach Art von Heftklammern formschlüssig in einer dem Kettenstegboden K_{b} zugewandten Kontaktleiste 12 einerseits und einer auf einer gegenüberliegenden Oberfläche des Kettenbands 4b aufliegenden Lochleiste 13 andererseits gehalten sind. Die Kontaktleiste 12 und die Lochleiste 13 liegen jeweils flächig auf den gegenüberliegenden Oberflächen des Kettenbands 4b auf und flankieren demzufolge das Kettenband 4b ober- und unterseitig. Die als Durchdringungsstifte gestalteten Durchdringungselemente 8b ragen vollständig in Hochrichtung durch das Kettenband 4b hindurch und sind mit entsprechenden ober- und unterseitigen, winkelig ausgerichteten Schenkelabschnitten nach Art von Krampen oder Klammern in der Kontaktleiste 12 und der Lochleiste 13 formschlüssig gehalten.

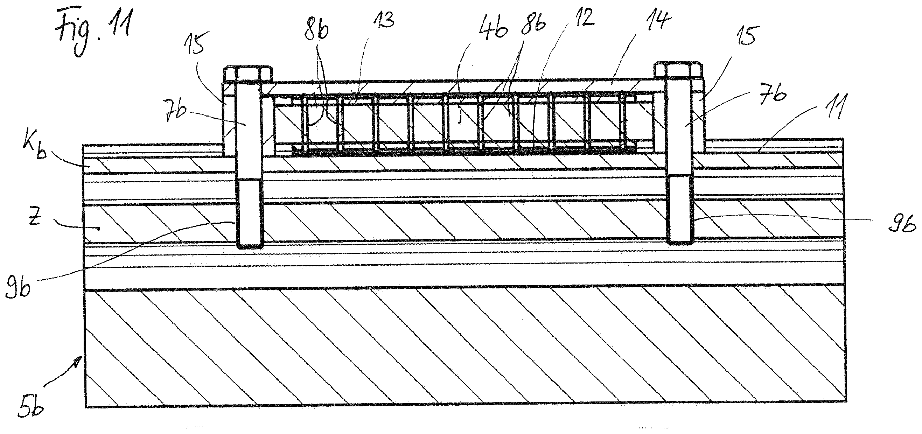

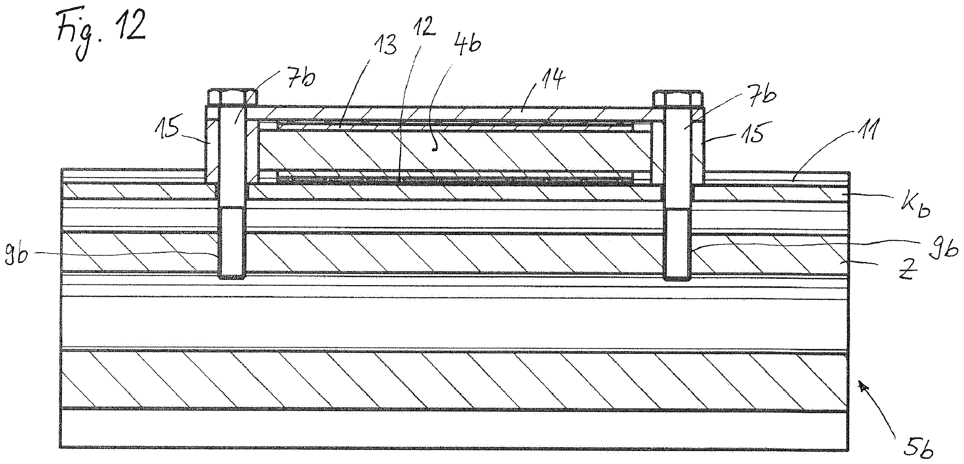

Der Kettenstegboden K_{b} weist eine über eine gesamte Länge des Kettenstegs 5b durchgängige Aussparung auf, die als nutförmige Profilierung ausgeführt ist. Eine Breite dieser Aussparung 11 ist auf eine Breite der Kontaktleiste 12 derart abgestimmt, dass die Kontaktleiste 12 in Kettenlaufrichtung formschlüssig in der Aussparung 11 aufgenommen ist. Zur Sicherung des Kettenbands 4b einschließlich der Durchdringungselemente 8b, der Kontaktleiste 12 und der Lochleiste 13 an dem Kettenstegboden K_{b} weist die Trägeranordnung zusätzlich eine Trägerleiste 14 auf, die auf der Lochleiste 13 in Kettenlaufrichtung formschlüssig aufliegt und deren Länge so gestaltet ist, dass die Trägerleiste 14 beidseitig über gegenüberliegende Seitenränder des Kettenbands 4b in Längsrichtung des Kettenstegs 5b hinausragt. In diesen über die Breite des Kettenbands 4b hinausragenden Seitenbereichen ist die Trägerleiste 14 mit jeweils einem Durchtritt versehen, durch den eine Befestigungsschraube 7b hindurchragt. Die Befestigungsschrauben 7b sind in Gewindelöcher 9b im Kettensteg 5b eingeschraubt, die bis zum Zwischensteg Z hindurchragen. Mit den Befestigungsschrauben 7b drückt die Trägerleiste 14 die Lochleiste 13 mit den Durchdringungselementen 8b, das Kettenband 4b und die Kontaktleiste 12 gegen den Kettenstegboden K_{b}. Die Befestigungsschrauben 7b verhindern eine Relativbewegung zwischen dem Kettensteg 5b und dem Kettenband 4b quer zur Kettenlaufrichtung. Zur Unterstützung dieser formschlüssigen Positionssicherung quer zur Kettenlaufrichtung durchdringen die Befestigungsschrauben 7b jeweils einen Abstandsblock 15, der mit einer zentralen Durchtrittsbohrung 16 versehen ist. Die Abstandsblöcke 15 sind beim dargestellten Ausführungsbeispiel würfelförmig aus Metall hergestellt und liegen, wie den Fig. 11 und 12 entnehmbar ist, bündig an den gegenüberliegenden Seitenrandbereichen des Kettenbands 4b an. Eine Höhe des jeweiligen Abstandsblocks 15 entspricht einer Dicke des Kettenbands 4b zuzüglich der Dicken der Lochleiste 13 und der Kontaktleiste 12, so dass die Abstandsblöcke 15 zusätzlich zur Positionssicherung des Kettenbands 4b quer zur Kettenlaufrichtung auch noch als Abstandshalter in Hochrichtung des Kettenbands 4b und des Kettenstegs 5b dienen. Ein zu starkes Zusammenquetschen des Kettenbands 4b in montiertem Zustand der Befestigungsschrauben 7b und der Trägeranordnung gemäß Fig. 11 wird hierdurch vermieden.

Die Durchdringungselemente 8b wie auch die Trägerleiste 14, die Lochleiste 13, die Kontaktleiste 12 und die Abstandsblöcke 15 sind jeweils aus Metallmaterialien, vorzugsweise einer Stahl- oder einer Aluminiumlegierung, hergestellt.

Die Trägerleiste 14 weist auf ihrer der Lochleiste 13 zugewandten Seite eine nutförmige Profilierung auf, die Seitenränder der Lochleiste 13 in Kettenlaufrichtung formschlüssig umgreift.

Zur Montage des Kettenstegs 5b am jeweiligen Kettenband 4b werden zunächst die Kontaktleiste 12 und die Lochleiste 13, die jeweils mit einer der Anzahl der Durchdringungsstifte entsprechenden Anzahl von Löchern versehen sind, mithilfe der Durchdringungselemente 8b ober- und unterseitig an das Kettenband 4b angeheftet. Im angehefteten Zustand der Kontaktleiste 12 und der Lochleiste 13 durchdringen die Durchdringungselemente 8b das Kettenband 4b in Hochrichtung und sind jeweils formschlüssig mit ihren oberen und unteren, über die Dicke des Kettenbands 4b nach oben und nach unten hinausragenden Schenkelabschnitten mit der Kontaktleiste 12 und der Lochleiste 13 verbunden. Anschließend wird der Kettensteg 5b mit seinem Kettenstegboden K_{b} so relativ zur Kontaktleiste 12 und damit relativ zum Kettenband 4b positioniert, dass die Kontaktleiste 12 in die Aussparung 11 des Kettenstegbodens K_{b} eintaucht. In dieser vormontierten Position wird die Trägerleiste 14 auf die Lochleiste 13 aufgesetzt, die Abstandsblöcke 15 werden beidseitig des Kettenbands 4b positioniert und relativ zu den Gewindebohrungen 9b ausgerichtet. Anschließend wird die gesamte Anordnung durch die Montage der Befestigungsschrauben 7b und das Festschrauben dieser Befestigungsschrauben 7b fixiert.

## Patentansprüche

1. Laufwerkskette für ein Kettenfahrzeug mit mehreren, in Kettenlaufrichtung parallel zueinander erstreckten Kettenbändern (4), an denen eine Vielzahl von quer zur Kettenlaufrichtung ausgerichteten Kettensteganordnungen befestigt ist, wobei jede Kettensteganordnung einen Kettensteg (5) aufweist, der im Bereich seines Kettenstegbodens (K mit wenigstens einem Kettenband (4) verbunden ist, wobei zur Verbindung des Kettenstegbodens (K) mit dem wenigstens einen Kettenband (4) mehrere Durchdringungselemente (8) vorgesehen sind, die das wenigstens eine Kettenband (4) auf Höhe des jeweiligen Kettenstegs (5) durchdringen und dem Kettenstegboden (K) - in Kettenlaufrichtung gesehen - formschlüssig zugeordnet sind, **dadurch gekennzeichnet, dass** an dem Kettenstegboden als Durchdringungselemente mehrere von dem Kettenstegboden aus in Richtung des Kettenbandes (4) abragende Dorne (8) befestigt sind, die in montiertem Zustand in das Kettenband eingedrückt sind, um - in Kettenlaufrichtung gesehen - einen Formschluss mit dem Kettenband (4) zu erzielen, dass der Kettensteg (5) mittels wenigstens einer einen Durchtritt in dem Kettenband (4) durchdringenden Schraubverbindung (7, 9) und wenigstens einem Unterlagelement (6) mit dem Kettenband (4) verbunden ist, dass die Dorne (8) für jedes Kettenband (4) jeweils benachbart zu der pro Kettenband (4) vorgesehenen, wenigstens einen Schraubverbindung (7, 9) am Kettenstegboden angeordnet sind, dass jeder Dorn (8) eine Eindringspitze sowie einen Befestigungssockel aufweist, und dass der Kettenstegboden mit Aufnahmen zum Einsetzen und Sichern der Befestigungssockel der Dorne (8) versehen ist, und dass die Durchtritte in den Kettenbändern (4) mit metallischen Stützbuchsen versehen sind, die als Abstandshalter zwischen dem Kettenstegboden (K) und dem wenigstens einen Unterlagelement (6) dienen.

2. Laufwerkskette nach Anspruch 1, **dadurch gekennzeichnet, dass** im Bereich jedes Kettenbandes (4) wenigstens zwei Reihen von Dornen (8) am Kettenstegboden vorgesehen sind, die insbesondere parallel zueinander ausgerichtet sind.

3. Laufwerkskette nach Anspruch 1, **dadurch gekennzeichnet, dass** eine Länge jeder Eindringspitze jedes Dornes (8) kleiner oder gleich einer Dicke des zugeordneten Kettenbandes (4) ist.

4. Laufwerkskette nach einem der vorhergehenden Ansprüche, **dadurch gekennzeichnet, dass** mehrere Dorne auf einer Trägerplatte fest angeordnet sind, die mit dem Kettenstegboden verbunden ist.

## Claims

1. A drive chain for a tracked vehicle with several track belts (4) extending parallel to one another in the chain running direction, to which belts a plurality of track cleat arrangements aligned transversely to the chain running direction is fastened, wherein each track cleat arrangement has a track cleat (5) which is connected to at least one track belt (4) in the area of its track cleat bottom (K), and wherein several penetration elements (8) are provided for connecting the track cleat bottom (K) to the at least one track belt (4), which penetrate the at least one track belt (4) at the level of the respective track cleat (5) and are associated with the track cleat bottom (K) - seen in the chain running direction - in a positive connection, **characterized in that** several spikes (8) projecting from the track cleat bottom in the direction of the track belt (4) are fastened to the track cleat bottom as penetration elements and in the fitted state are pressed into the track belt in order to achieve - when seen in the chain running direction - a positive connection with the track belt (4); **in that** the track cleat (5) is connected to the track belt (4) by means of at least one bolt connection (7, 9) penetrating a passage through the track belt (4) and by at least one supporting element (6); **in that** the spikes (8) for each track belt (4) are each arranged on the track cleat bottom adjacent to the at least one bolt connection (7, 9) provided per track belt (4); **in that** each spike (8) has a penetrating tip and a fastening base; **in that** the track cleat bottom is provided with receptacles for inserting and securing the fastening base of the spikes (8); and **in that** the passages through the track belts (4) are provided with metal support bushings which act as spacers between the track cleat bottom (K) and the at least one supporting element (6).

2. The drive chain according to claim 1, **characterized in that** in the area of each track belt (4) at least two rows of spikes (8) are provided on the track cleat bottom which are aligned in particular parallel to one another.

3. The drive chain according to claim 1, **characterized in that** a length of each penetrating tip of each spike (8) is smaller than or equal to a thickness of the associated track belt (4).

4. The drive chain according to any of the preceding claims, **characterized in that** several spikes are permanently arranged on a carrier plate which is connected to the track cleat bottom.

## Revendications

1. Chaîne de chenilles d'un véhicule à chenilles avec plusieurs bandes de chenilles (4) s'étendant parallèlement les unes aux autres dans le sens de marche de la chaîne, sur lesquelles est fixée une multitude d'agencements de crampons orientés transversalement par rapport au sens de marche de la chaîne, sachant que chaque agencement de crampon présente un crampon (5) qui est relié avec au moins une bande de chenilles (4) dans la zone de sa base de crampon (K), sachant que plusieurs éléments de pénétration (8) sont prévus pour relier la base de crampon (K) à ladite au moins une bande de chenilles (4), lesquels traversent ladite au moins une bande de chenilles (4) à hauteur du crampon respectif (5) et sont associés par complémentarité de forme à la base de crampon (K) - dans le sens de marche de la chaîne, **caractérisée en ce que** sont fixés comme éléments de pénétration sur la base de crampon plusieurs pics (8) dépassant de la base de crampon en direction de la bande de chenilles (4), qui sont enfoncés dans la bande de chenilles (4) à l'état monté pour obtenir un emboîtement avec la bande de chenilles (4) - vu dans le sens de marche de la chaîne, que le crampon (5) est relié à la bande de chenilles (4) au moyen d'au moins un raccord vissé (7, 9) perçant un passage dans la bande de chenilles (4) et d'au moins un élément d'appui (6), que les pics (8) sont disposés, pour chaque bande de chenilles (4), sur la base de crampon, respectivement au voisinage dudit au moins un raccord vissé (7, 9), prévu pour chaque bande de chenilles (4), que chaque pic (8) présente une pointe de pénétration ainsi qu'un socle de fixation, et que la base de crampon est pourvue de logements pour l'insertion et le blocage des socles de fixation des pics (8), et que les passages dans les bandes de chenilles (4) sont pourvus de manchons d'appui métalliques qui servent d'entretoises entre la base de crampon (K) et ledit au moins un élément d'appui (6).

2. Chaîne de chenilles selon la revendication 1, **caractérisée en ce que** dans la zone de chaque bande de chenilles (4) sont prévues au moins deux rangées de pic (8) sur la base de crampon, qui sont orientées en particulier parallèlement l'une par rapport à l'autre.

3. Chaîne de chenilles selon la revendication 1, **caractérisée en ce qu'**une longueur de chaque pointe de pénétration de chaque pic (8) est inférieure ou égale à une épaisseur de la bande de chenilles (4) associée.

4. Chaîne de chenilles selon l'une des revendications précédentes, **caractérisée en ce que** plusieurs pics sont fixés sur une plaque support qui est reliée à la base de crampon.
